# EUROPÄISCHE PATENTSCHRIFT

(11) **EP 2 244 820 B1**
(45) Veröffentlichungstag und Bekanntmachung des Hinweises auf die Patenterteilung: **12.04.2017**
(21) Anmeldenummer: 09710846.8
(22) Anmeldetag: 04.02.2009
(51) Int. Cl.: B01J 2/26, B01J 2/04

(54) **VORRICHTUNG ZUM PASTILLIEREN**
DEVICE FOR TABLETTING
PASTILLEUR

(30) Priorität: 13.02.2008 DE 102008010351
(43) Veröffentlichungstag der Anmeldung: 03.11.2010
(73) Patentinhaber: Sandvik Materials Technology Deutschland GmbH, 40549 Düsseldorf (DE)
(72) Erfinder: SCHROMM, Hans-Kurt, 71522 Backnang (DE); SCHERMUTZKI, Konrad, 71686 Remseck (DE); KLEINHANS, Matthias, 71336 Waiblingen-Hohenacker (DE)
(74) Vertreter: Patentanwälte Ruff, Wilhelm, Beier, Dauster & Partner mbB
(86) Internationale Anmeldenummer: PCT/EP2009/000726
(87) Internationale Veröffentlichungsnummer: WO 2009/100839

(56) Entgegenhaltungen:
- EP-A1- 0 938 923
- EP-A2- 0 145 839
- DE-A1-102005 044 035
- DE-B4- 19 781 525

## Beschreibung

Die Erfindung betrifft eine Vorrichtung zum Vertropfen eines fließfähigen Produkts mit einer rotierenden Außentrommel und einem sich in die Außentrommel hinein erstreckenden Zuführkanal für das zu vertropfende Produkt, wobei die Außentrommel auf ihrem Umfang Durchgangsöffnungen aufweist, die das zu vertropfende Produkt ausgehend vom Zuführkanal durchquert und nachfolgend in Tropfenform verlässt.

Derartige Vorrichtungen zum Pastillieren sind bekannt und beispielsweise in der europäischen Offenlegungsschrift EP 0 145 839 A2 beschrieben. Derartige Vorrichtungen werden von der Anmelderin unter der Marke "Rotoform" hergestellt und vertrieben.

Mit der Erfindung soll eine verbesserte Vorrichtung zum Vertropfen geschaffen werden.

Erfindungsgemäß ist hierzu eine Vorrichtung zum Vertropfen eines fließfähigen Produkts mit einer rotierenden Außentrommel und einem sich in die Außentrommel hinein erstreckenden Zuführkanal für das zu vertropfende Produkt vorgesehen, wobei die Außentrommel auf ihrem Umfang Durchgangsöffnungen aufweist, die das zu vertropfende Produkt ausgehend vom Zuführkanal durchquert und nachfolgend in Tropfenform verlässt, bei der wenigstens ein Außenumfang der Außentrommel mit einer Beschichtung versehen ist, die im Vergleich zu einem Grundmaterial der Außentrommel eine Benetzung mit dem zu vertropfenden Produkt verringert.

Überraschenderweise hat sich gezeigt, dass die Verringerung einer Benetzung wenigstens auf dem Außenumfang der Außentrommel die Qualität der hergestellten Pastillen oder erstarrten Produkttropfen verbessert. Tatsächlich werden durch die Beschichtung, die eine Benetzung mit dem zu vertropfenden Produkt verringert, die mittels der gelochten Außentrommel erzeugten Tropfen besser und rückstandsfrei auf das Stahlband abgelegt oder in eine Fallstrecke übergeben. Speziell ist zu beobachten, dass die Pastillen gleichmäßiger und kontrollierter auf dem Band abgelegt werden, da sich die Tropfen schneller und ohne Rückstände an der Außentrommel zu hinterlassen von der Außentrommel ablösen. Dadurch kann das Stahlband dichter mit Tropfen belegt werden, wodurch auch im Allgemeinen und speziell bei gleicher Anlagengröße eine Erhöhung der Pastillierleistung erzielt werden kann. Eine Dicke der Beschichtung ist vorzugsweise kleiner als 1 mm. Gute Ergebnisse werden mit Beschichtungen erreicht, deren Dicke zwischen 0,001 mm (10⁻⁶m) und 0,1mm (100x10⁻⁶m) liegt. Weiterhin wird durch die Beschichtung, die wenigstens am Außenumfang der Außentrommel vorgesehen ist, das Entstehen von Sekundärtropfen verhindert, die bei konventionellen Vorrichtungen dadurch entstehen, dass Produktreste auf der sich drehenden Außentrommel zurückbleiben, dann von dieser abgeschleudert werden und in der Folge in kleinen Tröpfchen unkontrolliert auf dem Stahlband landen. Durch die erfindungsgemäße Beschichtung wird das Entstehen von Sekundärtropfen auf dem Stahlband verhindert. Da keine Produktreste auf der Außenseite der gelochten Außentrommel zurückbleiben, kann auf einen sogenannten Einweiser verzichtet werden, mit dem üblicherweise Produktreste vom Außenumfang der Außentrommel wieder in die Durchgangsöffnungen der Außentrommel zurückgedrückt werden und durch den gleichzeitig der Außenumfang der Außentrommel gereinigt wird. Die erfindungsgemäße Vorrichtung ist zum Vertropfen flüssiger oder pastöser Stoffe, beispielsweise Produktschmelzen, geeignet, insbesondere auch für alle Stoffe, die bereits mit den bekannten Rotoform-Vorrichtungen der Anmelderin pastilliert werden können. Die gelochte Außentrommel kann oberhalb eines umlaufenden Stahlbandes, oberhalb der Fallstrecke eines Prillturmes oder oberhalb eines Erstarrungskanals angeordnet sein.

In Weiterbildung der Erfindung ist die Innenwandung der Durchgangsöffnungen wenigstens teilweise mit der Beschichtung versehen.

Die Tropfenbildung kann dadurch weiter verbessert werden. Vorteilhafterweise sind die Innenwandungen der Durchgangsöffnungen nur teilweise beschichtet und speziell ist lediglich der Austrittsbereich, also der sich unmittelbar an den Außenumfang anschließende Bereich mit der Beschichtung versehen. Beispielsweise kann ausgehend vom Außenumfang lediglich etwa ein Viertel bis ein Drittel der Länge der Durchgangsbohrung mit der Beschichtung versehen sein. Bereits eine solche Teilbeschichtung, die sich in einfacher Weise vom Außenumfang der Trommel her auftragen lässt, wirkt sich äußerst positiv auf die Vertropfung aus.

In Weiterbildung der Erfindung bildet die Beschichtung mit dem zu vertropfenden Produkt einen Kontaktwinkel von mehr als 90°, insbesondere mehr als 120°, aus.

Auf diese Weise wird das Anhaften von Produktresten im Wesentlichen vollständig vermieden. Bei einem Kontaktwinkel von mehr als 90° tritt keine nennenswerte Benetzung mehr auf, da ein Produkttropfen sich auf der beschichteten Oberfläche zu einem fast kugelförmigen Tropfen zusammenzieht. Bei leichter Neigung der Oberfläche gleitet der Tropfen ohne jegliche Rückstände herunter, das fließfähige Produkt perlt also ab. Im Idealfall tritt ein Kontaktwinkel von 180° auf, so dass in diesem Fall der Produkttropfen die beschichtete Oberfläche nur an einem Punkt berührt. Im Spezialfall von Wasser als Flüssigkeit wird bei Kontaktwinkeln von mehr als 90° von einer hydrophoben Oberfläche gesprochen, bei einem Kontaktwinkel von mehr als 120° wird eine solche Oberfläche als superhydrophob bezeichnet. Bei noch größeren Kontaktwinkeln wird auch vom sogenannten Lotuseffekt gesprochen.

In Weiterbildung der Erfindung ist die Beschichtung als Nanobeschichtung, insbesondere superhydrophobe Nanobeschichtung, ausgebildet.

Mit einer Nanobeschichtung kann eine Benetzung mit dem zu pastillierenden Produkt extrem verringert und praktisch vollständig vermieden werden, so dass das Anhaften von Produkttropfen auf dem Außenumfang vollständig vermieden wird. Die Produkttropfen lösen sich dadurch leicht und kontrolliert von der Außentrommel und können dadurch im Vergleich zu konventionellen Vorrichtungen dichter nebeneinander auf dem Stahlband abgelegt werden und es kann ein Einweiser an der Außentrommel entfallen. Im Falle eines wasserhaltigen zu pastillierenden fließfähigen Produkts wird eine superhydrophobe Nanobeschichtung vorgesehen. Als Nanobeschichtung wird eine Beschichtung bezeichnet, die eine nanostrukturierte Oberfläche mit Erhebungen und Vertiefungen im Bereich von weniger als 100 nm aufweist. Durch diese Oberflächenstrukturierung wird auch aufgrund der geometrischen Verhältnisse eine benetzte Fläche verringert. Weiter verbessert werden kann eine aufgebrachte Nanobeschichtung, wenn diese auf eine mikrostrukturierte Oberfläche aufgebracht wird, die Erhebungen und Vertiefungen im Bereich von weniger als 15 Mikrometern ausbildet. Wenigstens der Außenumfang sowie gegebenenfalls die Innenwandung der Durchgangsöffnungen werden daher vorteilhafterweise mit einer mikrostrukturierten Oberfläche versehen, auf die dann eine Beschichtung aufgebracht wird, die eine nanostrukturierte Oberfläche ausbildet.

In Weiterbildung der Erfindung besteht die Beschichtung aus Kunststoff.

Kunststoffbeschichtungen können zuverlässig auf zahlreiche Materialien, beispielsweise auf eine Außentrommel aus rostfreiem Stahl, aufgebracht werden und weisen gute Eigenschaften in Bezug auf die Verringerung der Benetzung sowie auch in Bezug auf eine Standzeit der Beschichtung auf. Beispielsweise kann die Kunststoffbeschichtung Silikon, Polytetrafluorethylen (PTFE), Perfluoralkoxylalkan (PFA), Polyetheretherketon, Polypropylen, Polyamid oder Polyethylen aufweisen.

Die Beschichtung kann aber beispielsweise auch eine Keramikbeschichtung sein oder aus einem Nanolack bestehen. Nanolacke sind Lacke, die auf die Außentrommel aufgetragen werden können und dann eine Beschichtung ausbilden, die die Benetzung extrem verringert.

In Weiterbildung der Erfindung besteht die Beschichtung aus einem fließfähigen Medium, insbesondere Öl, Fett, wasserverdünnte Medien, wie Detergentien, Emulsionen, polyether-modifizierte Polysiloxane und/oder Wachs. Eine die Benetzung verringernde Beschichtung kann auch mittels eines fließfähigen Mediums erreicht werden. Mit Beschichtungen aus Öl, Fett und/oder Wachs werden gute Ergebnisse vor allem bei wasserhaltigen, zu pastillierenden Produkten erzielt.

In Weiterbildung der Erfindung sind Mittel vorgesehen, um die Beschichtung kontinuierlich oder in vordefinierten Zeitabständen aufzusprühen und/oder aufzutragen.

Gerade bei Beschichtungen aus fließfähigen Medien werden diese Beschichtungen vergleichsweise schnell abgetragen und in vordefinierten Zeitabständen oder kontinuierlich kann die Erneuerung dieser Beschichtung erforderlich sein. Zum Auftragen der Beschichtungen können beispielsweise Sprühdüsen oder Auftragswalzen verwendet werden. Der Außenumfang und die Innenwandungen der Durchgangsöffnungen können beispielsweise mittels Sprühdüsen kontinuierlich neu beschichtet werden. Alternativ kann mit einer Sprühdüse oder Auftragswalze auf den Außenumfang so viel fließfähiges Medium aufgetragen werden, dass dieses beispielsweise durch die eigene Gewichtskraft, dann, wenn die betreffende Durchgangsöffnung gerade im oberen Bereich des Außenumfangs positioniert ist, in die Durchgangsöffnungen hineinfließt.

In Weiterbildung der Erfindung weisen das zu vertropfende Produkt und die Beschichtung eine entgegengesetzte Polarität auf.

Gerade bei einer Beschichtung aus fließfähigem Medium und beim Vertropfen von Flüssigkeiten, insbesondere Schmelzen, muss darauf geachtet werden, dass das zu vertropfende Produkt nicht lösbar in diesem fließfähigen Beschichtungsmedium ist. Polare Stoffe lösen sich gut in polaren Lösungsmitteln und unpolare Stoffe gut in unpolaren Lösemitteln. Bei entgegengesetzter Polarität sind das zu vertropfende Produkt und die Beschichtung somit schlecht löslich. Bei der Pastillierung von polaren Stoffen kann daher mit gutem Ergebnis eine unpolare Beschichtung eingesetzt werden.

Weitere Merkmale und Vorteile der Erfindung ergeben sich aus den Ansprüchen und der nachfolgenden Beschreibung bevorzugter Ausführungsformen der Erfindung im Zusammenhang mit den Zeichnungen. Einzelmerkmale der unterschiedlichen dargestellten Ausführungsformen lassen sich dabei in beliebiger Weise miteinander kombinieren, ohne den Rahmen der Anmeldung zu überschreiten. In den Zeichnungen zeigen:
- Fig. 1: eine schematische Schnittansicht einer erfindungsgemäßen Vorrichtung zum Pastillieren von fließfähigen Produkten,
- Fig. 2: eine abschnittsweise Schnittansicht der Außentrommel der Vorrichtung der Fig. 1,
- Fig. 3: eine abschnittsweise Schnittansicht einer Außentrommel einer weiteren Ausführungsform der Erfindung,
- Fig. 4: eine abschnittsweise Schnittansicht einer Außentrommel einer noch weiteren Ausführungsform der Erfindung und
- Fig. 5: eine schematische Darstellung eines Produkttropfens auf einer beschichteten Oberfläche

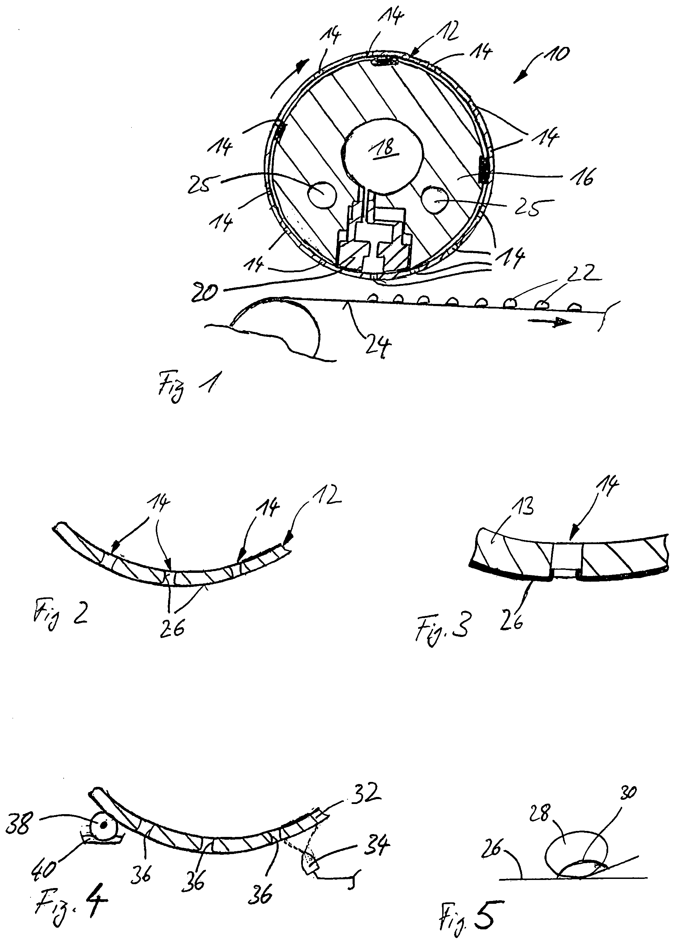

In der schematischen Schnittansicht der Fig. 1 ist eine Vorrichtung 10 zum Pastillieren von fließfähigen Produkten dargestellt. Die Vorrichtung 10 weist eine rotierende Außentrommel 12 auf, die mit über ihren Umfang verteilten Durchgangsöffnungen 14 versehen ist. Die rotierende Außentrommel 12 ist drehbar auf einem zylinderförmigen Kern 16 angeordnet, in dem ein Zuführkanal 18 für ein zu pastillierendes Produkt und eine Düsenleiste 20 vorgesehen sind, die an einem Innenumfang der Außentrommel 12 anliegt. Über den Zuführkanal 18 zugeführtes, fließfähiges und zu pastillierendes Produkt wird in die Düsenleiste 20 hineingefördert und liegt dadurch dann auf der Innenseite der Außentrommel 12 an. Sobald eine der Durchgangsöffnungen 14 unter der Düsenleiste 20 vorbeiläuft, wird das fließfähige Produkt durch die Durchgangsöffnung 14 hindurchgedrückt oder fließt selbsttätig hindurch. Nach dem Verlassen der Durchgangsöffnung 14 bildet sich ein Produkttropfen 22, der dann auf einem umlaufenden Stahlband 24 abgelegt wird. Das Stahlband 24 ist beispielsweise gekühlt, so dass sich die Produkttropfen 22 im Verlauf des Transports auf dem Stahlband 24 verfestigen und dann an einer, in Fig. 1 nicht dargestellten Umlenkung vom Stahlband 24 abgenommen und weiterverarbeitet werden können. Heizkanäle 25 erwärmen den Kern 16 und halten das Produkt dadurch in fließfähigem Zustand.

In der vergrößerten, Schnittansicht der Fig. 2 ist die Außentrommel 12 abschnittsweise dargestellt. Der Außenumfang der Außentrommel 12 sowie die Innenwandung der Durchgangsöffnungen 14 in der Außentrommel 12 sind mit einer Beschichtung 26 versehen. Die Beschichtung 26 verringert im Vergleich zu einem Grundmaterial der Außentrommel 12, beispielsweise nicht rostender Stahl, eine Benetzung mit dem zu pastillierenden Produkt. Die Beschichtung 26 bildet dabei mit dem zu pastillierenden Produkt einen Kontaktwinkel von mehr als 90° aus. Dadurch kann sichergestellt werden, dass keine Produktreste in den Durchgangsöffnungen 14 oder auf dem Außenumfang verbleiben, nachdem die Produkttropfen 22 auf dem Stahlband 24 abgelegt sind. Die Produkttropfen 22 gleiten, nachdem die Rückseite der Durchgangsöffnung 14 durch die Düsenleiste 20 wieder verschlossen ist, leicht und rückstandsfrei aus den Durchgangsöffnungen 14 heraus und lösen sich schnell und rückstandsfrei von der Beschichtung 26 auf dem Außenumfang der Außentrommel 12 ab. Wesentlich ist dabei, dass der Außenumfang mit der Beschichtung 26 versehen ist. Eine Beschichtung der Innenwandung der Durchgangsöffnungen 14 kann vorteilhaft sein, ist aber nicht zwingend erforderlich. Die Erfindung kann zum Vertropfen einer Vielzahl von Produkten eingesetzt werden, die beispielsweise mittels der bekannten Rotoform-Vorrichtungen verarbeitet werden können. Die Entstehung von sogenannten Sekundärtropfen, also Produktreste, die von der Außentrommel 12 bei der Rotation unkontrolliert auf das Stahlband 24 abgeschleudert werden, kann dadurch im Wesentlichen vollständig verhindert werden. Da die Produkttropfen 22 schneller und kontrollierter aus den Durchgangsöffnungen 14 auf das Stahlband 24 herausgleiten und sich zügiger vom Außenumfang ablösen, können die Produkttropfen 22 im Vergleich zu herkömmlichen Vorrichtungen dichter nebeneinander abgelegt werden. Das führt zu einer Leistungssteigerung der Pastillieranlage. Da Sekundärtropfen verhindert werden, wird auch eine verbesserte Pastillenqualität erzielt.

Die Vorrichtung 10 selbst kann darüber hinaus vereinfacht werden, da ein bei konventionellen Vorrichtungen üblicherweise erforderlicher Einweiser, der Produktreste vom Außenumfang der Außentrommel wieder in die Durchgangsöffnungen 14 hineindrückt und den Außenumfang der Außentrommel 12 reinigt, entfallen kann.

Die Darstellung der Fig. 3 zeigt eine vergrößerte, abschnittsweise Schnittansicht einer Außentrommel 13 gemäß einer weiteren Ausführungsform der Erfindung. Zu erkennen ist, dass die Beschichtung 26 lediglich auf einen Teilbereich der Innenwandung der Durchgangsöffnung 14 aufgetragen ist. Speziell bedeckt die Beschichtung 26 den vollständigen Außenumfang der Außentrommel 13, erstreckt sich aber ausgehend vom Außenumfang lediglich auf etwa ein Viertel der Länge der Durchgangsbohrung 14 in diese hinein. Die Kante am Übergang zwischen Innenwandung 14 und Außenumfang der Außentrommel 13 ist damit vollständig von der Beschichtung bedeckt. Der, gesehen vom Außenumfang, hintere Abschnitt der Innenwandung der Durchgangsöffnung 14 bleibt dahingegen unbeschichtet. Eine solche Beschichtung 26 lässt sich in einfacher Weise vom Außenumfang her auftragen und sorgt für ein deutlich verbessertes Ablöseverhalten der Produkttropfen vom Außenumfang.

In der Darstellung der Fig. 5 ist schematisch ein Produkttropfen 28 dargestellt, der auf einer mit der Beschichtung 26 versehenen ebenen Oberfläche aufliegt. Es ist zu erkennen, dass sich der Produkttropfen 28 annähernd zur Kugelform zusammengezogen hat. Ein Kontaktwinkel 30 wird nun zwischen der Beschichtung 26 und der Oberfläche des Produkttropfens 28 gemessen. Im dargestellten Fall beträgt der Kontaktwinkel 30 deutlich mehr als 90° und etwa 160°. Bei solchen, sehr hohen Kontaktwinkeln, spricht man von einer extrem geringen Benetzbarkeit und vom sogenannten Lotuseffekt.

Wird eine Oberflächenspannung des Produkttropfens 28 verringert, so läuft der Tropfen 28 auseinander und der Kontaktwinkel 30 verringert sich, im Extremfall auf Werte nahe 0°.

Die Darstellung der Fig. 4 zeigt eine weitere abschnittsweise Schnittansicht einer Außentrommel 32 einer erfindungsgemäßen Vorrichtung zum Pastillieren. Die Außentrommel 32 ist identisch zur Außentrommel 12 der Fig. 1 ausgebildet, die Pastilliervorrichtung weist aber gegenüber dem Außenumfang der Außentrommel 32 Sprühdüsen 34 auf, mit denen ein flüssiges Medium, beispielsweise Öl, auf den Außenumfang der Außentrommel 32 gesprüht wird. Die Sprühdüsen 34 sind unterhalb der Außentrommel 32 angeordnet, können aber im Wesentlichen an einer beliebigen Stelle am Außenumfang angeordnet sein. Das aufgesprühte Öl gelangt zunächst auf den Außenumfang der Außentrommel 32, im nicht dargestellten oberen Abschnitt des Außenumfangs dann gegebenenfalls durch Gewichtskraft auch auf die Innenwandung der Durchgangsöffnungen 36 in der Außentrommel 32. Auf dem Außenumfang der Außentrommel 32 und gegebenenfalls an der Innenwandung der Durchgangsöffnungen 36 bildet sich somit ein Ölfilm, der die Benetzung eines beispielsweise wasserhaltigen, zu pastillierenden Produkts stark verringert.

Alternativ oder zusätzlich zum Aufsprühen einer Beschichtung aus einem flüssigen Medium ist in der Darstellung der Fig. 4 eine Auftragswalze 38 dargestellt, die am Außenumfang der Außentrommel 32 abrollt. Die Auftragswalze 38 wird an ihrem Außenumfang in einer Wanne 40, die ein Flüssigkeitsreservoir bildet, benetzt und überträgt die Flüssigkeit auf ihrem Außenumfang dann auf den Außenumfang der Außentrommel 32. Die mittels der Auftragswalze 38 aufgebrachte Beschichtung bildet dann mit dem zu pastillierenden Produkt einen sehr geringen Kontaktwinkel und verringert dadurch die Benetzung.

## Patentansprüche

1. Vorrichtung zum Vertropfen eines fließfähigen Produkts mit einer rotierenden Außentrommel(12; 32) und einem sich in die Außentrommel(12; 32) hinein erstreckenden Zuführkanal (18) für das zu pastillierende Produkt, wobei die Außentrommel (12; 32) auf ihrem Umfang Durchgangsöffnungen (14; 36) aufweist, die das zu pastillierende Produkt ausgehend vom Zuführkanal (18) durchquert und nachfolgend in Tropfenform verlässt, **dadurch gekennzeichnet, dass** wenigstens der Außenumfang der Außentrommel (12; 32) mit einer Beschichtung (26) versehen ist, die im Vergleich zu einem Grundmaterial der Außentrommel (12; 32) eine Benetzung mit dem zu vertropfenden Produkt verringert, und dass die Innenwandungen der Durchgangsöffnungen (14; 36) wenigstens teilweise mit der Beschichtung (26) versehen sind.

2. Vorrichtung nach Anspruch 1, **dadurch gekennzeichnet, dass** die Beschichtung (26) mit dem zu pastillierenden Produkt einen Kontaktwinkel (30) von mehr als 90°, insbesondere mehr als 120°, ausbildet.

3. Vorrichtung nach wenigstens einem der vorstehenden Ansprüche, **dadurch gekennzeichnet, dass** die Beschichtung als Nanobeschichtung ausgebildet ist.

4. Vorrichtung nach wenigstens einem der vorstehenden Ansprüche, **dadurch gekennzeichnet, dass** die Beschichtung (26) aus Kunststoff besteht.

5. Vorrichtung nach wenigstens einem der vorstehenden Ansprüche, **dadurch gekennzeichnet, dass** die Beschichtung Silikon, Polytetrafluorethen (PTFE), Perfluoralkoxylalkan (PFA) Polyetheretherketon (PEEK), Polypropylen (PP), Polyethen (PE), Polyamid (PA), Nanolack oder Keramik aufweist.

6. Vorrichtung nach wenigstens einem der vorstehenden Ansprüche, **dadurch gekennzeichnet, dass** die Beschichtung aus einem fließfähigen Medium, insbesondere Öl, Fett, wasserverdünnte Medien, wie Detergentien, Emulsionen, polyether-modifizierte Polysiloxane und/oder Wachs, besteht.

7. Vorrichtung nach wenigstens einem der vorstehenden Ansprüche, **dadurch gekennzeichnet, dass** Mittel (34, 38, 40) vorgesehen sind, um die Beschichtung kontinuierlich oder in vordefinierten Zeitabständen aufzusprühen und/oder aufzutragen.

8. Vorrichtung nach wenigstens einem der vorstehenden Ansprüche, **dadurch gekennzeichnet, dass** das zu vertropfende Produkt und die Beschichtung eine entgegengesetzte Polarität aufweisen.

## Claims

1. Device for expelling drops of a flowable product having a rotating outer drum (12; 32) and a feed channel (18) extending into the outer drum (12; 32) for the product to be pelletized, wherein the outer drum (12; 32) has on its circumference passage openings (14; 36) through which the product to be pelletized runs from the feed channel (18) and then exits in droplet shape, **characterized in that** at least the outer circumference of the outer drum (12; 32) is provided with a coating (26) which reduces wetting with the product to be expelled, when compared with a basic material of the outer drum (12; 32), and **in that** the inner walls of the passage openings (14; 36) are at least partially provided with the coating (26).

2. Device according to Claim 1, **characterized in that** the coating (26) forms with the product to be pelletized a contact angle (30) of more than 90°, in particular more than 120°.

3. Device according to at least one of the preceding claims, **characterized in that** the coating is designed as a nano-coating.

4. Device according to at least one of the preceding claims, **characterized in that** the coating (26) consists of plastic.

5. Device according to at least one of the preceding claims, **characterized in that** the coating has silicone, polytetrafluoroethylene (PTFE), perfluoroalkoxyalkane (PFA), polyether ether ketone (PEEK), polypropylene (PP), polyethylene (PE), polyamide (PA), nano-paint or ceramic.

6. Device according to at least one of the preceding claims, **characterized in that** the coating is composed of a flowable medium, in particular oil, grease, water-diluted media such as detergents, emulsions, polyether-modified polysiloxanes and/or wax.

7. Device according to at least one of the preceding claims, **characterized in that** means (34, 38, 40) are provided to spray on and/or to apply the coating continuously or at predefined intervals.

8. Device according to at least one of the preceding claims, **characterized in that** the product to be expelled in drops and the coating have an opposite polarity.

## Revendications

1. Dispositif pour faire égoutter un produit coulant avec un tambour extérieur rotatif (12; 32) et un canal d'alimentation (18) s'étendant à l'intérieur du tambour extérieur (12; 32) pour le produit à pastiller, dans lequel le tambour extérieur (12; 32) présente sur son pourtour des ouvertures de passage (14; 36), que le produit à pastiller traverse en partant du canal d'alimentation (18) et quitte ensuite sous forme de gouttes, **caractérisé en ce qu'**au moins le pourtour extérieur du tambour extérieur (12; 32) est pourvu d'un revêtement (26), qui par comparaison avec un matériau de base du tambour extérieur (12; 32) réduit un mouillage avec le produit à égoutter, et **en ce que** les parois intérieures des ouvertures de passage (14; 36) sont pourvues au moins partiellement du revêtement (26).

2. Dispositif selon la revendication 1, **caractérisé en ce que** le revêtement (26) forme avec le produit à pastiller un angle de contact (30) de plus de 90°, en particulier de plus de 120°.

3. Dispositif selon au moins une des revendications précédentes, **caractérisé en ce que** le revêtement est réalisé sous forme de nano-revêtement.

4. Dispositif selon au moins une des revendications précédentes, **caractérisé en ce que** le revêtement (26) se compose de matière plastique.

5. Dispositif selon au moins une des revendications précédentes, **caractérisé en ce que** le revêtement présente de la silicone, du polytétrafluoroéthylène (PTFE), du perfluoroalcoxyalcane (PFA), du polyétheréthercétone (PEEK), du polypropylène (PP), du polyéthylène (PE), du polyamide (PA), une nanolaque ou une céramique.

6. Dispositif selon au moins une des revendications précédentes, **caractérisé en ce que** le revêtement se compose d'un milieu coulant, en particulier d'huile, de graisse, de milieux dilués à l'eau, comme des détergents, d'émulsions, de polysiloxanes modifiés au polyéther et/ou de cire.

7. Dispositif selon au moins une des revendications précédentes, **caractérisé en ce qu'**il est prévu des moyens (34, 38, 40) pour projeter et/ou déposer le revêtement en continu ou à des intervalles de temps prédéfinis.

8. Dispositif selon au moins une des revendications précédentes, **caractérisé en ce que** le produit à égoutter et le revêtement présentent une polarité opposée.
